# EUROPEAN PATENT APPLICATION

(11) **EP 3 998 766 A1**
(43) Date of publication of application: **18.05.2022**
(21) Application number: 19936715.2
(22) Date of filing: 27.11.2019
(51) Int. Cl.: H04N 5/225

(54) **SUPPORT FRAME, CAMERA MODULE, AND ELECTRONIC DEVICE TERMINAL**

(30) Priority: 11.07.2019 CN 201910625015
(71) Applicant: Nanchang O-Film Optical-Electronic Tech Co., Ltd, 330013 Jiangxi (CN)
(72) Inventor: LIU, Jinbao, Nanchang, Jiangxi 330013 (CN); ZHANG, Sanfeng, Nanchang, Jiangxi 330013 (CN); ZHU, Shumin, Nanchang, Jiangxi 330013 (CN); MU, Jiangtao, Nanchang, Jiangxi 330013 (CN); ZHANG, Shengyun, Nanchang, Jiangxi 330013 (CN); ZHUANG, Shiliang, Nanchang, Jiangxi 330013 (CN)
(74) Representative: Ramrath, Lukas
(86) International application number: PCT/CN2019/121322
(87) International publication number: WO 2021/003960

(57) **Abstract**

A support frame is provided according to the disclosure. The support frame is configured to be arranged between a lens and a circuit board of a camera module. The support frame includes a support frame body and at least one support column. The support frame body has a first surface and a second surface opposite to the first surface and defines a light-passing hole which extends through the first surface and the second surface. The at least one support column is disposed on the second surface of the support frame body and extends in an optical axis direction of the light-passing hole. The disclosure solves a technical problem of a larger size of the camera module due to a certain space occupied by a frame of a lens seat. The disclosure provides a camera module including the support frame and an electronic equipment terminal including the camera module.

## Description

### CROSS-REFERENCE TO RELATED APPLICATION(S)

This application claims priority to Chinese Patent Application No. 201910625015.X, filed on July 11, 2019, and entitled "SUPPORT FRAME, CAMERA MODULE, AND ELECTRONIC EQUIPMENT TERMINAL", the entire disclosure of which is hereby incorporated by reference.

### TECHNICAL FIELD

This disclosure relates to the field of imaging, in particular, to a support frame, a camera module, and an electronic equipment terminal.

### BACKGROUND

Currently, with the development of camera modules in the market, a size of the camera module is required to be reduced. Nonetheless, generally in a conventional camera module, a lens and a lens seat constitute a lens assembly, the lens assembly is attached to a printed circuit board, the lens seat and the printed circuit board define a space therebetween, and the lens and other components are installed within the space. However, a frame of the lens seat that defines the space needs to occupy a certain space, resulting in a large size of the camera module.

### SUMMARY

The disclosure aims at providing a support frame, a camera module, and an electronic equipment terminal, to solve a technical problem of a large size of the camera module due to a certain space occupied by a frame of a lens seat.

A support frame is provided according to the disclosure. The support frame is configured to be arranged between a lens and a circuit board of a camera module. The support frame includes a support frame body and at least one support column. The support frame body has a first surface and a second surface opposite to the first surface and defines a light-passing hole which extends through the first surface and the second surface. The at least one support column is disposed on the second surface of the support frame body and extends in an optical axis direction of the light-passing hole. When the support frame of the disclosure is used in the camera module, the support frame is supported on the circuit board, and the support frame and the circuit board form a space therebetween for accommodating elements such as an image sensor, so as to protect the elements such as the image sensor, and the like. Compared with the related art, the lens seat eliminates a need of an outer frame, and the size of the camera module can be reduced.

In an implementation, the second surface has multiple sub-regions. The support frame body is a plate frame which includes multiple plate frame arms connected end to end in sequence. The multiple plate frame arms each include one sub-region and define the light-passing hole. The at least one support column includes multiple support columns, where each support column is arranged at an intersection of two adjacent sub-regions. The support frame body is in a shape of plate frame, such that the second surface of the support frame body has a sufficiently large area and the support frame body has a small height, thereby avoiding an increased height of the camera module and providing a sufficient area to set the support frame column. Furthermore, when the support column is arranged at the intersection of two adjacent sub-regions, the support column will not occupy the effective area of the second surface, and a larger effective area of the second surface is achieved.

In an implementation, the support frame further includes multiple ribs which each protrude from the second surface and extend along an outer edge of the sub-region of the plate frame arm. The multiple ribs are arranged to block a liquid sealing body from infiltrating too much into the space during sealing the camera module, so as to prevent damage to elements such as the image sensor from the liquid sealing body.

In an implementation, a number of the ribs is less than or equal to a number of the plate frame arms; and/or the rib protrudes from the second surface by a height which is less than or equal to a height by which the support column protrudes from the second surface. In this way, in a case that the number of the ribs is equal to the number of the plate frame arms and the height of the rib is equal to the height of the support column, a second surface of the rib directly contacts a surface of the circuit board, and the support frame directly seals the space, such that the lens seat eliminates a need of an outer frame, and the size of the camera module is reduced. In a case that part of the ribs does not directly contact the circuit board, there will be a gap between the second surface of the support frame body and the surface of the circuit board, and the gap is used to accommodate elements on the circuit board. A sealing body is arranged between the surface of the circuit board and the second surface of the support frame body to seal the gap, thereby sealing the space.

A camera module is provided according to the disclosure. The camera module includes a lens, a circuit board, a filter, an image sensor, and the above mentioned support frame. The circuit board has a circuit board surface. The circuit board surface has a central region and an edge region surrounding the central region. The support column extends toward the circuit board and is supported on the edge region, such that the support frame body and the circuit board define a space therebetween. The image sensor is received in the space and located at the central region. The filter is received in the space and faces the image sensor. The filter is attached to the support frame body and covers the light-passing hole. The lens is mounted on the first surface of the support frame body and faces away from the image sensor. The support column of the support frame is supported on the circuit board surface to form the space for accommodating the image sensor and the filter, which not only protects the image sensor accommodated in the space, but also eliminates a need of the outer frame of the lens seat in the existing camera module, and thus the size of the camera module is reduced.

In an implementation, the circuit board further includes multiple auxiliary electronic components arranged on the edge region of the circuit board. The multiple auxiliary electronic components define a gap therebetween, and the support column extends through the gap to be supported on the circuit board. The gaps between the auxiliary electronic components are used as passages for supporting the support column on the circuit board, which facilitates the support column to be supported on the circuit board.

In an implementation, the camera module further includes a sealing body, and the sealing body is connected between the second surface of the support frame body and the circuit board surface. The sealing body is used to seal the gap in case there is a gap between the surface of the circuit board and the second surface of the support frame body. The sealing body includes an adhesive layer, a filler, an adhesive, and other materials to better seal the space and protect elements such as the image sensor located in the space.

In an implementation, the support frame body is provided with a filter mounting structure on the second surface of the support frame body facing the image sensor, and the filter mounting structure is a groove or a protruding frame. The filter is installed in the groove or the protruding frame, which increases a contact area between the filter and the second surface of the support frame body, such that more glue can be accommodated, and the adhesiveness of the filter on the filter mounting structure is improved.

In an implementation, the support frame has a radial dimension smaller than or equal to the lens, thereby further reducing the size of the camera module.

In an implementation, an electronic equipment terminal is provided according to the disclosure. The electronic equipment terminal includes a housing and the above mentioned camera module, the camera module is mounted on the housing, thereby reducing the size of the electronic equipment terminal while reducing the size of the camera module.

In conclusion, in the disclosure, the circuit board surface of the circuit board is supported by the support column of the support frame to form a space in which elements such as the image sensor can be accommodated, which solves the technical problem of the larger size of the camera module due to a certain space occupied by the frame of the lens seat.

### BRIEF DESCRIPTION OF THE DRAWINGS

To describe technical solutions in implementations of the disclosure more clearly, the following briefly introduces the accompanying drawings required for describing the implementations or the related art. Apparently, the accompanying drawings in the following description only illustrate some implementations of the disclosure. Those of ordinary skill in the art may also obtain other drawings based on these accompanying drawings without creative efforts.
FIG. 1 is a schematic cross-sectional structural view of a camera module according to an implementation of the disclosure.
FIG. 2 is an enlarged schematic structural schematic view of Part A in FIG. 1.
FIG. 3 is an exploded schematic structural view of the camera module illustrated in FIG. 1.
FIG. 4 is a schematic structural view of the camera module illustrated in FIG. 1.
FIG. 5 is a schematic structural view of the support frame in FIG. 1 at a first state.
FIG. 6 is a schematic structural view of the support frame in FIG. 1 at a second state.
FIG. 7 is a schematic cross-sectional structure view of the support frame in FIG. 1.

### DETAILED DESCRIPTION

A terminal is provided according to the disclosure. The terminal includes a housing (not illustrated) and a camera module mounted on the housing. The camera module will be described in detail as follows.

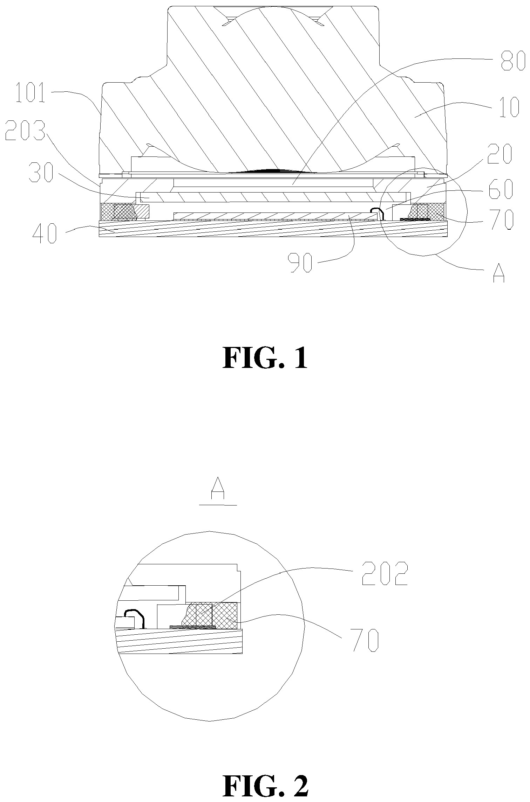

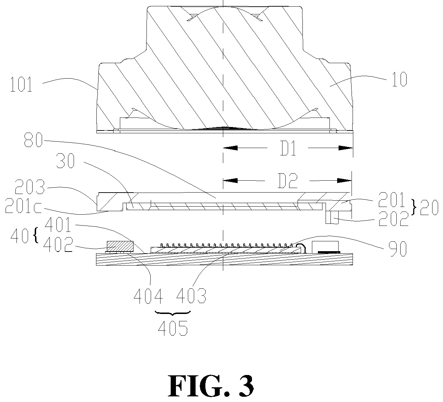

Referring to FIGS. 1-4, the camera module includes a support frame 20, a lens 10, a circuit board 40, a filter 30, and an image sensor 90. The support frame 20 includes a support frame body 201 and at least one support column 202. The support frame body 201 has a first surface 201e and a second surface 201c opposite to the first surface 201e and defines a light-passing hole 80 which extends through the first surface 201e and the second surface 201c. At least one support column 202 is disposed on the second surface 201c of the support frame body 201 and extends in an optical axis direction of the light-passing hole 80. In an implementation, the support column 202 includes one or more support columns 202.

The circuit board 40 has a circuit board surface 405. The circuit board surface 405 has a central region 403 and an edge region 404 surrounding the central region 403. The support column 202 extends toward the circuit board 40 and is supported on the edge region 404, such that the support frame 20 and the circuit board 40 define a space 60 therebetween. The image sensor 90 is received in the space 60 and located at the central region 403. The filter 30 and the lens 10 are respectively arranged at two opposite sides of the support frame body 201. The filter 30 is received in the space 60 and faces the image sensor 90. The filter 30 is attached to the support frame body 201 and covers the light-passing hole 80. The lens 10 is mounted on the support frame body 201 and faces away from the image sensor 90. The lens 10 is fixed on the support frame body 201 via an adhesive. The image sensor 90 has a photosensitive region. The light-passing hole 80 is disposed facing the photosensitive region of the image sensor 90. The support column 202 is supported on the circuit board surface 405 to form the space 60 for accommodating elements such as the image sensor 90 and the filter 30, and the elements such as the image sensor 90 and the filter 30 located in the space 60 can be protected.

In the disclosure, as a result, by supporting the support column 202 on the surface 405 of the circuit board 40, the space 60 is defined, and then the elements such as the image sensor can be accommodated in the space 60, a need of a lens seat is eliminated, the lens 10 is not encapsulated by the lens seat, and the camera module has a smaller size. As such, a technical problem of a larger size of the camera module due to a certain space occupied by a frame of the lens seat is resolved. Therefore, when the camera module has a smaller size, the electronic equipment terminal also has a smaller size, and the appearance of the electronic equipment terminal will not be adversely affected by the size of the camera module.

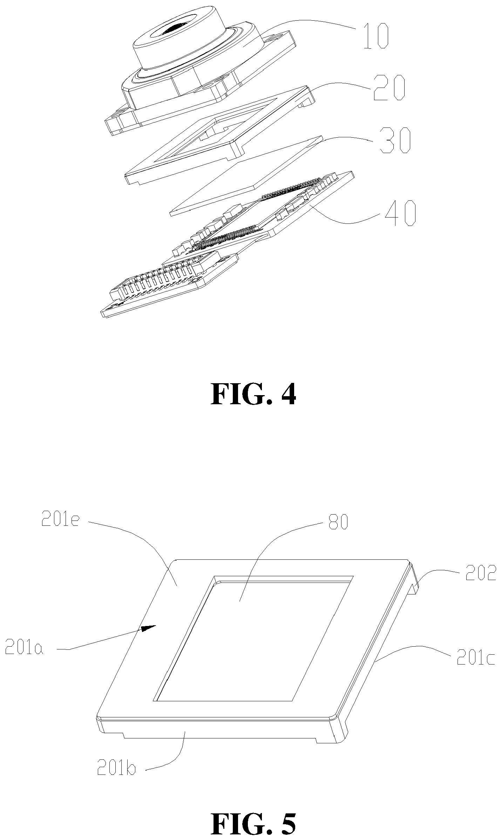

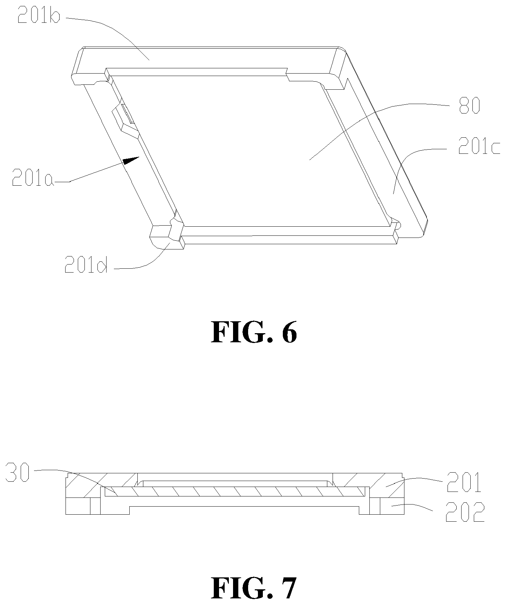

Referring to FIGS. 5-7, in particular, the second surface 201c has multiple sub-regions. The support frame body 201 is a plate frame which includes multiple plate frame arms 201a connected end to end in sequence. The multiple plate frame arms 201a each include one sub-region and define the light-passing hole 80. The at least one support column 202 includes multiple support columns 202. Each support column 202 is arranged at an intersection of two adjacent sub-regions. In this implementation, the plate frame is a rectangular-ambulatory-plane frame enclosed by elongated plate bodies. The support frame body 201 is in a shape of plate frame, such that the second surface 201c of the support frame body 201 has a sufficiently large area and the support frame body 201 has a small height, thereby avoiding an increased height of the camera module and providing a sufficient area to set the support frame column 201. Furthermore, when the support column 22 is arranged at the intersection of two adjacent sub-regions, the support column 202 will not occupy the effective area of the second surface 201c, and a larger effective area of the second surface 201c is achieved.

In an implementation, the support frame body 201 further includes multiple ribs 201b, where each rib protrudes from the second surface 201c and extends along an outer edge of the sub-region of the plate frame arm 201a. It can be understood that each rib 201b is disposed at the outer edge of the sub-region of the plate frame arm 201a, and each rib 201b extends in an optical axis direction of the light-passing hole 80. One rib 201b is disposed on one plate frame arm 201a, and the rib 201b extends in a direction away from the plate frame arm 201a, so as to block a liquid sealing body from infiltrating too much into the space 60 during sealing the camera module, and prevent the elements such as the image sensor from being damaged by the liquid sealing body.

The number of the ribs 201b is less than or equal to a number of the plate frame arms 201a. The rib 201b protrudes from the second surface 201c by a height which is less than or equal to a height by which the support column 202 protrudes from the second surface 201c. That is, the number of the ribs 201b is not greater than the number of the plate frame arms 201a. The height of the rib 201b is not greater than that of the support column 202. In an implementation, the number of the ribs 201b is equal to the number of the plate frame arms 201a. The height of the rib 201b is equal to the height of the support column 202. In this implementation, the rib 201b has a lower surface. As such, when the support column 202 is supported on the circuit board 40, the lower surface of the rib 201b is in direct contact with the surface 405 of the circuit board 40, and the support frame 20 directly seals the space 60, eliminating the need for the outer frame of the lens seat and reducing the size of the camera module.

The camera module further includes a sealing body 70. The sealing body 70 is connected between the second surface 201c of the support frame body 201 and the surface 405 of the circuit board 40. That is, the surface 405 of the circuit board 40 and the second surface 201c of the support frame body 201 are indirectly connected via the sealing body 70, and the sealing body 70 seals the gap between the surface 405 of the circuit board 40 and the second surface 201c of the support frame body 201.

In an implementation, when the number of the ribs 201b is less than the number of the plate frame arms 201a, and/or when the height of the rib 201b is less than the height of the support column 202, and at least part of the ribs 201b does not directly contact the circuit board 40, then there will be a gap between the second surface 201c of the support frame body 201 and the surface 405 of the circuit board 40. The sealing body 70 is disposed between the surface 405 of the circuit board 40 and the second surface 201c of the support frame body 201 to seal the gap, thereby sealing the space 60. At the same time, the multiple ribs 201 are arranged to prevent the liquid sealing body 70 from infiltrating into the space 60 too much.

The sealing body 70 includes various materials such as an adhesive layer, a filler, and an adhesive. In an implementation, the sealing body 70 is an adhesive layer formed by solidifying liquid glue. By coating the liquid sealing body 70 on the outside of the space 60, the liquid sealing body 70 is hardened to form a solidified sealing body 70, and the solidified sealing body 70 seals the space 60. The sealing body 70 can also be made of other materials with sealing function. The material and shape of the sealing body 70 are not limited.

The camera module further includes multiple auxiliary electronic components 402 arranged on the edge region 404 of the circuit board 40, and the multiple auxiliary electronic components 402 define a gap therebetween, and the support column 202 extends through the gap to be supported on the circuit board 40. The gaps between the auxiliary electronic components 402 are used as passages for supporting the support column 202 on the circuit board 40, which facilitates the support column 202 to be supported on the circuit board 40. The camera module further includes metal wires, and the metal wires electrically connect the image sensor 90 with the auxiliary electronic component 402. In this implementation, the auxiliary electronic component 402 includes a surface 405. The surface 405 of the auxiliary electronic component 402 is directly connected to the second surface 201c of the support frame body 201. Alternatively, the surface 405 of the auxiliary electronic component 402 is connected to the second surface 201c of the support frame body 201 via the sealing body 70. Due to the existence of the auxiliary electronic component 402, part of the ribs 201b cannot extend to the circuit board 40, the height of the part of the ribs 201 b is not greater than that of the support column 202. The support column 202 is in contact with the circuit board 40, and the part of the ribs 201b does not contact the circuit board 40. After the specific assembly is completed, if there are a gap between the support column 202 and the auxiliary electronic component 402, a gap between the support frame 20 and the circuit board 40, as well as a gap between the adjacent auxiliary electronic components 402, the sealing body 70 fills and seals the gaps.

In an implementation, the number of the ribs 201b is less than that of the plate frame arms 201a. That is, in this implementation, a part of the plate frame arms 201a is connected to the ribs 201b, and another part of the plate frame arms 201a is not connected to the ribs 201b. The circuit board 40 is provided with a fewer number of auxiliary electronic components 402 on a region facing the ribs 201b, which has a weak ability to block the liquid sealing body 70, and thus there is a need to block the liquid sealing body 70 through the rib 201b, so as to reduce the amount of the sealing body 70 entering the space 60. The circuit board 40 is provided with a greater number of auxiliary electronic components 402 on the plate frame arm 201 which is not connected to the rib 201b, since the auxiliary electronic components 402 can block the flow of the liquid sealing body 70, the liquid sealing body 70 can be blocked from entering the space 60 without the rib 201b. The rib 201b of the disclosure can be determined according to the requirements. It is also possible that each plate frame arm 201a is connected to the rib 201b, or not connected to the rib 201b. Alternatively, there are ribs 201b provided at some positions where the rib 201b is required, and there is no rib 201b provided at positions where the rib 201b is not required. Therefore, in the disclosure, the support frame 20 is semi-open by arranging the ribs 201b at partial region. However, since a first outer side 203 of the support frame 20 does not extend beyond a second outer side 101 of the lens 10 in a radial direction, and the rib 201b does not extend toward the lens 10, the arrangement of the ribs 201b does not adversely affect the size of the camera module, and can reduce the amount of the sealing body 70 to be arranged.

At least one support column 202 is disposed on any plate frame arm 201a, or at an intersection corner 201d of two adjacent plate frame arms 201a. Specifically, in order to make the support frame 20 more stable and balanced on the circuit board 40, the support column 202 is disposed at the intersection corner 201d of the two adjacent plate frame arms 201a. Also, when the support column 202 is disposed at the intersection corner 201d of the adjacent two plate frame arms 201a, it does not occupy volume within the space 60, and thus there is a larger available volume of the space 60. At the same time, a gap between the auxiliary electronic component 402 between the intersection corner of the plate frame arm 201a is large, which is more convenient for the support column 202 to extend through the gap to be supported on the circuit board 40. In this implementation, three support columns 202 are arranged at three corners where the plate frame arms 201a intersect, and the shape of the support column 202 is irregular. In other implementations, the support columns 202 can also be disposed at other positions of the plate frame arm 201a. In the disclosure, the number of support columns 202 is at least two, and may be more than one, which depends on a specific camera module. The shape of the support column 202 can be designed according to the gap between the auxiliary electronic components 402, for example, it can be a circle, a square, an irregular rectangle, and the like. In this implementation, the support frame 20 is a fully open structure formed by multiple plate frame arms 201a and the support column 202, without any frame.

The support frame body 201 is provided with a filter mounting structure on the second surface 201c of the support frame body 201 facing the image sensor 90. The shape of the filter mounting structure is optional. The filter mounting structure can be a groove, and the filter is embedded in the groove. Alternatively, the filter mounting structure can also be designed as a protruding frame, and the filter can be positioned and installed by abutting against a protruding part. The filter mounting structure can also be formed in any shape. The groove or the protruding frame increases a contact area between the filter and the second surface of the support frame body 201, and more glue can be accommodated on the contact surface, the adhesiveness of the filter on the filter mounting structure is improved. In an implementation, each plate frame arm 201a defines a catch (not illustrated) at a surface facing the image sensor 90. Multiple catches form a groove (not illustrated), and the filter is embedded in the groove. Specifically, in order to make full use of an internal space of the support frame 20, the plate frame arm 201a defines the catch at the surface facing the image sensor 90, so that an edge of the filter 30 is embedded in multiple catches, and then the filter 30 is embedded in the groove and covers the light-passing hole 80. As such, the arrangement of the catches makes full use of the thickness of the plate frame arm 201a, it will not bring an increase in the height of the support frame 20 due to the filter 30, and thus the camera module has a lower height and a smaller size. In the disclosure, the filter 30 may be made of glass, plastic, mica wafer, or other types of optical materials. In this implementation, the filter 30 is a glass that has undergone coating treatment, which can pass/cut off light in a certain wavelength band, such as an infrared cut filter, an infrared transmission filter, or the like. The number, location, and shape of the filter 30 are not limited.

A radial dimension D2 of the support frame 20 is smaller than or equal a radical dimension D1 of the lens 10. In this implementation, a direction from the circuit board 40 to the lens 10 or from the lens 10 to the circuit board 40 is defined as an axial direction of the camera module. The axial direction is also the optical axis direction of the camera module. The radial direction of the camera module is a direction perpendicular to the axial direction. The support frame 20 has the first outer side 203. The lens 10 has the second outer side 101. The first outer side 203 does not extends beyond the second outer side 101 in the radial direction. A radial height D2 of the first outer side 203 is smaller than or equal to a radial height D1 of the second outer side 101. Therefore, in order to reduce the size of the camera module, the size of the camera module can be determined according to the radial dimension D1 of the lens 10. As such, when the radial dimension D2 of the support frame 20 is smaller than or equal to the radial dimension D1 of the lens 10, the size of the camera module depends on the lens 10, such that the size of the camera module can be set according to a required size of the lens 10. Thus, when the lens 10 has a smaller size, the camera module can be set to have a smaller size. Therefore, in the disclosure, the radial dimension D2 of the support frame 20 is smaller than or equal to the radial dimension D1 of the lens 10, and the lens 10 is not packaged by other elements, so that the camera module can be made smaller, which solves the problem of a large size of the camera module due to the lens seat.

In an implementation, the radial dimension D2 of the support frame 20 is equal to the radial dimension D1 of the lens 10. That is, the first outer side 203 of the support frame 20 is flush with the second outer side 101 of the lens 10. Specifically, in order to set a larger support frame 20 to stably support the lens 10, and also reduce the filling amount of the sealing body 70, the radial dimension of the support frame 20 can be set equal to the radial dimension of the lens 10. That is, the first outer side 203 is flush with the second outer side 101, so as to ensure that the support frame 20 can not only stably support the lens 10, but also reduce the filling amount of the sealing body 70 on the premise that the size of the support frame 20 does not adversely affect the smaller size of the camera module. In other implementations, the radial dimension of the support frame 20 may also be set to be smaller than the radial dimension of the lens 10. That is, the first outer side 203 of the support frame 20 is inside the second outer side 101 of the lens 10 to ensure a smaller camera module, but in this manner a larger amount of the sealing body 70 is required.

Those described above are just preferred implementations of the disclosure, and of course, the scope of the disclosure cannot be limited thereto. Those of ordinary skill in the art can understand that all or part of the processes for implementing the above implementations, and equivalent changes made according to the claims of the disclosure are within the scope of the disclosure.

## Claims

1. A support frame, configured to be arranged between a lens and a circuit board of a camera module and comprising:
a support frame body having a first surface and a second surface opposite to the first surface and defining a light-passing hole which extends through the first surface and the second surface; and
at least one support column disposed on the second surface of the support frame body and extending in an optical axis direction of the light-passing hole.

2. The support frame of claim 1, wherein
the second surface has a plurality of sub-regions;
the support frame body is a plate frame which comprises a plurality of plate frame arms connected end to end in sequence, wherein the plurality of plate frame arms each comprise one sub-region and define the light-passing hole; and
the at least one support column comprises a plurality of support columns, wherein each support column is arranged at an intersection of two adjacent sub-regions.

3. The support frame of claim 2, wherein the support frame further comprises a plurality of ribs, wherein each rib protrudes from the second surface and extends along an outer edge of the sub-region of the plate frame arm.

4. The support frame of claim 2, wherein
a number of the ribs is less than or equal to a number of the plate frame arms; and/or
the rib protrudes from the second surface by a height which is less than or equal to a height by which the support column protrudes from the second surface.

5. A camera module comprising a lens, a circuit board, a filter, an image sensor, and the support frame of any of claims 1-4, wherein
the circuit board has a circuit board surface, wherein the circuit board surface has a central region and an edge region surrounding the central region;
the support column extends toward the circuit board and is supported on the edge region, such that the support frame body and the circuit board define a space therebetween;
the image sensor is received in the space and located at the central region;
the filter is received in the space and faces the image sensor, and the filter is attached to the support frame body and covers the light-passing hole; and
the lens is mounted on the first surface of the support frame body and faces away from the image sensor.

6. The camera module of claim 5, wherein the circuit board further comprises a plurality of auxiliary electronic components arranged on the edge region of the circuit board, and the plurality of auxiliary electronic components define a gap therebetween, and the support column extends through the gap to be supported on the circuit board.

7. The camera module of claim 5 or 6, wherein the camera module further comprises a sealing body, and the sealing body is connected between the second surface of the support frame body and the circuit board surface.

8. The camera module of claim 5, wherein the support frame body is provided with a filter mounting structure on the second surface of the support frame body facing the image sensor, and the filter mounting structure is a groove or a protruding frame.

9. The camera module of claim 5, wherein the support frame has a radial dimension smaller than or equal to the lens.

10. An electronic equipment terminal, comprising a housing and the camera module of any of claims 5-9, wherein the camera module is mounted on the housing.
